# EUROPÄISCHE PATENTSCHRIFT

(11) **EP 0 537 504 B1**
(45) Veröffentlichungstag und Bekanntmachung des Hinweises auf die Patenterteilung: **29.12.1997**
(21) Anmeldenummer: 92116097.4
(22) Anmeldetag: 21.09.1992
(51) Int. Cl.: C08G 61/12, C08G 73/02

(54) **Verfahren zur Synthese filmförmiger Polymere mit elektrischer Leitfähigkeit durch anodische Oxidation in sulfonhaltigen Elektrolyten**
Process for the preparation of electrically conductive film-like polymers by anodic oxydation in a sulfone containing electrolyte
Procédé de préparation de polymères électroconducteurs sous forme de film, par oxydation anodique dans un électrolyte sulfonique

(30) Priorität: 01.10.1991 DE 4132614
(43) Veröffentlichungstag der Anmeldung: 21.04.1993
(73) Patentinhaber: BASF Aktiengesellschaft, 67063 Ludwigshafen (DE)
(72) Erfinder: Sauerer, Wolfgang, Dr., W-6740 Speyer (DE); Koch, Juergen, Dr., W-6708 Neuhofen (DE)

(56) Entgegenhaltungen:
- EP-A- 0 167 798
- EP-A- 0 189 891
- US-A- 4 550 064

## Beschreibung

Die Erfindung betrifft ein Verfahren zur Herstellung filmförmiger elektrischer leitfähiger Polymerer durch elektrochemische oxidative Polymerisation von Monomeren aus der Gruppe der fünfgliedrigen Heterozyklen wie des Pyrrols, Thiophens, Furans und deren Derivaten sowie der aromatischen Aminoverbindungen wie des Anilins und seiner Derivate.

Die oxidative Polymerisation von fünfgliedrigen Heterozyklen und aromatischen Aminen ist seit langem bekannt. Als Oxidationsmittel können zum Beispiel herkömmliche chemische Oxidantien wie Persulfate, Eisen(III)-, Kupfer(II)- oder Cer(IV)-Verbindungen Verwendung finden. Alternativ bedient man sich elektrochemischer Verfahren, wobei eine Metallelektrode mit hinreichend hohem elektrochemischem Potential die notwendigen Oxidationsprozesse bewirkt. Eine gute Beschreibung dieser Verfahren findet man in der einschlägigen Literatur. Als Beispiele seien genannt:
J. Heinze, "Electronically conducting polymers", Topics in Current Chemistry 152 (1990) 1
Z. Adamcova, L. Dempirova, "Film-forming electropolymerization", Progress in Organic Coatings, 16 (1989) 295
H. Naarmann, "Die elektrochemische Polymerisation", Die Angewandte Makromolekulare Chemie 162 (1988) 1
N.C. Billingham, P.D. Calvert, "Electrically conducting polymers - a polymer science viewpoint", Advances in Polymer Science 90 (1989) 1
G.B. Street, "Polypyrrole - from powder to plastics";
G. Tourillon, "Polythiophene and its derivatives";
A.F. Diaz, J. Bargon, "Electrochemical synthesis of conducting polymers", alle in: T.A. Skotheim (Hrsg.), Handbook of Conducting Polymers, Vol. 1; Marcel Dekker, Inc., New York und Basel, 1986.

Im Falle der elektrochemischen Synthese erhält man in der Regel filmförmige Polymere mit elektrischer Leitfähigkeit.

Hierfür wird eine entsprechende elektrochemische Zelle benötigt. Diese besteht im einfachsten Fall aus zwei Elektroden, zwischen denen sich ein Elektrolyt befindet.

Per definitionem versteht man bei exakter Sprechweise unter einem Elektrolyten eine ionisch leitende Phase (vgl. etwa K. Schwabe, Physikalische Chemie, Band 2: Elektrochemie, Akademie-Verlag Berlin, 1974). Als Elektrolyt können beispielsweise Salzschmelzen, Salzlösungen (Lösung eines sogenannten Leitsalzes in einem organischen oder anorganischen Lösungsmittel) oder Festelektrolyte eingesetzt werden (vgl. z.B. M. Armand, "Polymers with ionic conductivity", Advanced Materials 2 (1990) 278). Es sei angemerkt, daß die Begriffe "Leitsalz" und "Elektrolyt" vielfach synonym verwendet werden; in jedem Falle sollte unter einer Elektrolytlösung eine Lösung dissoziierter Kationen und Anionen in einem geeigneten Lösungsmittel verstanden werden.

Der Elektrolyt enthält in der Regel auch das zu polymerisierende Monomer und kann darüberhinaus Additive enthalten, die den Verlauf der durchzuführenden Elektropolymerisation oder die Eigenschaften der gebildeten Produkte zu beeinflussen vermögen.

Das gebildete Polymer wächst auf der Anode auf und kann bei hinreichender Dicke und mechanischer Qualität als freistehender, kompakter Film abgezogen werden.

DE 3 226 278 beschreibt ein spezielles Verfahren zur einfachen und wirtschaftlichen Herstellung prinzipiell endloser filmförmiger Polymere (speziell von Polymeren von Pyrrol oder Pyrrolderivaten, eventuell unter Verwendung bestimmter Comonomere) mit elektrischer Leitfähigkeit, bei dem in einem geeigneten Elektrolyten die Elektrolyse kontinuierlich betrieben wird. Hierzu wird durch die verwendete Elektrolyt-Lösung fortlaufend ein flächenförmig ausgebildetes anodenaktives Material durchgeführt (z.B. kann eine Zylinder-Walze als Anode verwendet werden), auf dem sich das Polymere filmförmig abscheidet und anschließend abgezogen werden kann.

DE 3 226 278 beschreibt auch geeignete Elektrolyt-Lösungen. Diese enthalten als Lösungsmittel organische polare Elektrolyt-Lösungsmittel (erwähnt werden Alkohole, Ether wie 1,2-Dimethoxyethan, Dioxan, Tetrahydrofuran und Methyltetrahydrofuran, Aceton, Acetonitril, Dimethylformamid, Dimethylsulfoxid, Methylenchlorid, N-Methylpyrrolidon und Propylencarbonat, ebenso Gemische dieser Lösungsmittel oder auch Polyglykole, die sich von Ethylenglykol, Propylenglykol oder Tetrahydrofuran ableiten, wie z.B. Polyethylenglykol, Polypropylenglykol, Polybutylenglykol oder Ethylenoxid-/Propylenoxid-Mischpolymere, die vorzugsweise durch Endgruppenverschluß als vollständige Polyether vorliegen) sowie geeignete Leitsalze.

Ganz allgemein finden sich in der Literatur eine große Zahl von Angaben hinsichtlich des Lösungsmittels, das für den Einsatz in Elektrolyt-Lösungen bei der elektrochemischen Herstellung von elektrisch leitfähigen Polymeren unter Verwendung von fünfgliedrigen Heterozyklen oder aromatischen Aminen als Monomer geeignet ist.

### Aufgabe der Erfindung

Trotz der großen Zahl von Vorschlägen zur Zusammensetzung von Elektrolytlösungen für die elektrochemische Polymerisation fünfgliedriger Heterozyklen und aromatischer Amine läßt sich kein allgemeines Konzept ableiten, um zu Polymerfilmen mit hoher mechanischer Qualität und hoher elektrischer Leitfähigkeit zu gelangen.

Zwar ist z.B. bekannt, daß etwa durch die Verwendung wenig nukleophiler, aprotischer Elektrolyt-Lösungsmittel wie Acetonitril oder Propylencarbonat in vielen Fällen Polypyrrolfilme guter Qualität erhalten werden (vgl. z.B. A.F. Diaz, J. Bargon, loc.cit.).

Jedoch liefert z.B. die Verwendung von Aceton, eines gleichfalls wenig nukleophilen, aprotischen Lösungsmittels keine Polypyrrolfilme oder nur Filme minderer Qualität.

Auch mit anderen organischen Elektrolyt-Lösungsmitteln wie Tetrahydrofuran, N-Methylpyrrolidon, Dimethylformamid, Dimethylsulfoxid oder Ethanol werden in vielen Fällen keine Polypyrrolfilme oder nur Filme minderer Qualität erhalten.

Aufgabe der vorliegenden Erfindung war es, neuartige Elektrolyt-Lösungsmittel und daraus abgeleitete Elektrolyte zu entwickeln, die die elektrochemische Synthese filmförmiger Polymere von fünfgliedrigen Heterozyklen oder aromatischen Aminen mit hoher mechanischer Qualität und hoher elektrischer Leitfähigkeit gestatten.

### Lösung

Es wurde gefunden, daß sich durch die Verwendung von Sulfonen als Elektrolyt-Lösungsmittel elektrochemisch filmförmige Polymere von fünfgliedrigen Heterozyklen und aromatischen Aminen mit hoher mechanischer Qualität und hoher elektrischer Leitfähigkeit erhalten lassen. Die Eigenschaften entsprechender Polypyrrolfilme etwa gleichen denen sehr guter Polypyrrolfilme, die unter Verwendung von Acetonitril oder Propylencarbonat hergestellt wurden, oder übertreffen diese sogar.

Dies ist umso überraschender, als zum Beispiel das chemisch verwandte und strukturell ähnliche Dimethylsulfoxid entweder keine Polypyrrolfilme oder nur Filme minderer Qualität liefert.

Filmförmige Polymere von fünfgliedrigen Heterozyklen und aromatischen Aminen mit besonders hoher Qualität werden erhalten, wenn der Elektrolyt durch Zusatz starker Säuren einen niedrigen pH-Wert aufweist, vorzugsweise einen pH-Wert von 3 oder weniger. Die starken Säuren können allein, zusammen mit ihren Salzen oder auch zusammen mit anderen salzartigen Verbindungen (wie sie z.B. in DE 3 226 278 erwähnt werden) als Elektrolyt-Leitsalz eingesetzt werden. Speziell empfiehlt sich die Verwendung aromatischer Sulfonsäuren, etwa der Benzol- oder Toluolsulfonsäure und ihrer Derivate.

Durch die Verwendung von Sulfonen erhält man Elektrolytsysteme, die schwer flüchtig, schwer entflammbar und toxikologisch wenig problematisch sind. Beispielsweise eignen sich:
- Sulfolan:: Siedepunkt 287°C, Flammpunkt 165°C; zur Toxikologie vgl. etwa Kirk-Othmer, Encyclopedia of Chemical Technology, 3^{rd} Edition, Vol. 21, S. 963, John Wiley & Sons, New York, 1983
- 3-Methylsulfolan:: Siedepunkt 276°C, Flammpunkt > 110°C
- Dipropylsulfon:: Siedepunkt 270°C, Flammpunkt 126°C
- Dibutylsulfon:: Siedepunkt ca. 290°C, Flammpunkt 143°C.

Allgemein kann man sagen, daß als Sulfone aliphatische, offenkettige oder cyclische Sulfone geeignet sind, die unter den Verfahrensbedingungen flüssig sind.

Es ist zweckmäßig, die Sulfone nicht alleine zu verwenden, sondern noch ein Hilfslösungsmittel mitzuverwenden. Als gut geeignet haben sich hierfür z.B. Glykole wie Ethylenglykol (EG), Polyglykole und Polyglykolether erwiesen. Außerdem kann Wasser mitverwendet werden, da die vorgenannten Lösungsmittel i.a. mit Wasser mischbar sind.

Für die nachstehenden Beispiele wurde als Elektrolyt eine 0,1 M Lösung von Benzolsulfonsäure (HBs) oder Tributylammoniumbenzolsulfonat (HNBu₃Bs) in verschiedenen Lösungsmitteln verwendet.

Eingesetzt wurde für die bei Raumtemperatur durchgeführten Synthesen eine Elektrolysezelle mit im Abstand von 2 cm parallel angeordneten, plattenförmigen Metallelektroden aus einer korrosionsbeständigen Nickel-Legierung. Als Gleichstromquelle diente ein NGK 70-Gerät der Fa. Rohde & Schwarz (Ausgangsspannung 0 bis 70 V, Ausgangsstrom 0 bis 1 A). Die Messung der Zellspannung erfolgte mittels eines PM 2521 Automatic Multimeters der Fa. Philips.

Die Stromdichte betrug jeweils 2 mA/cm², die Elektrolysedauer jeweils 90 Minuten. Der Elektrolyt wurde nicht gerührt.

Zur Bestimmung von Zugfestigkeit und Reipdehnung wurden Polypyrrol-Filmstreifen (Breite i.a. 10 mm, Länge 70 mm) in Anlehnung an DIN 53455 mit 100 mm/min verstreckt.

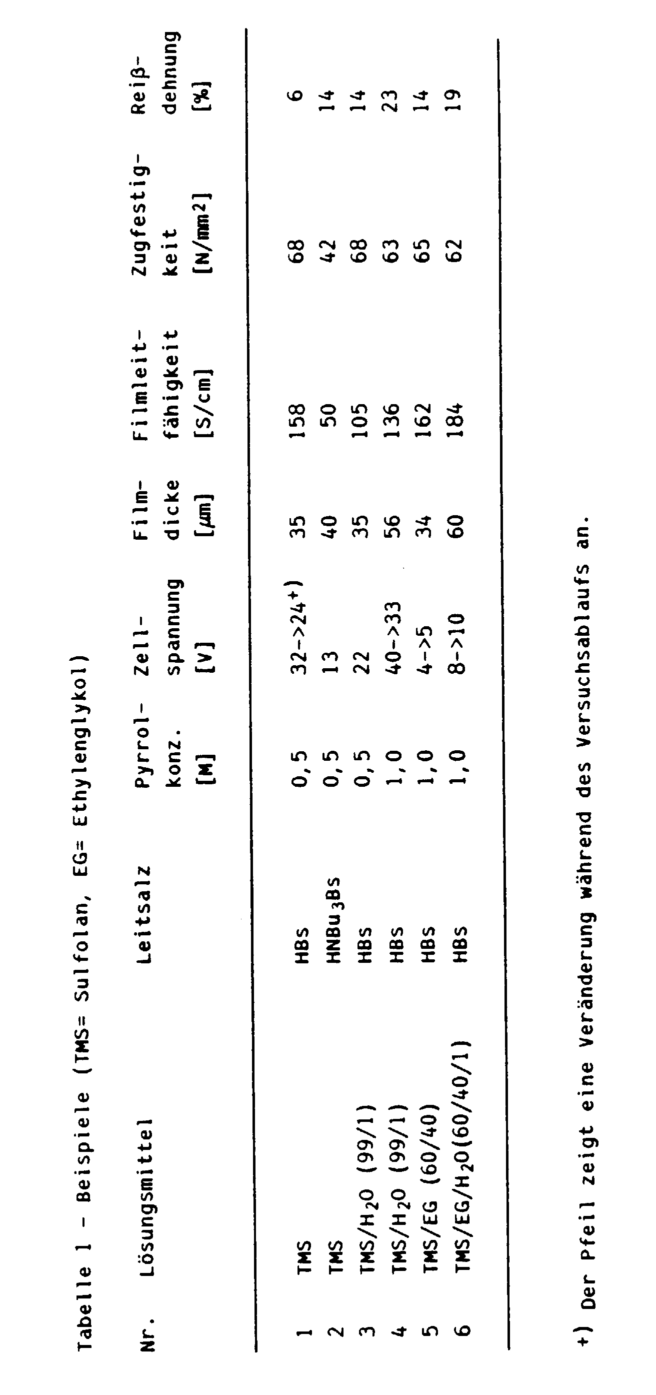

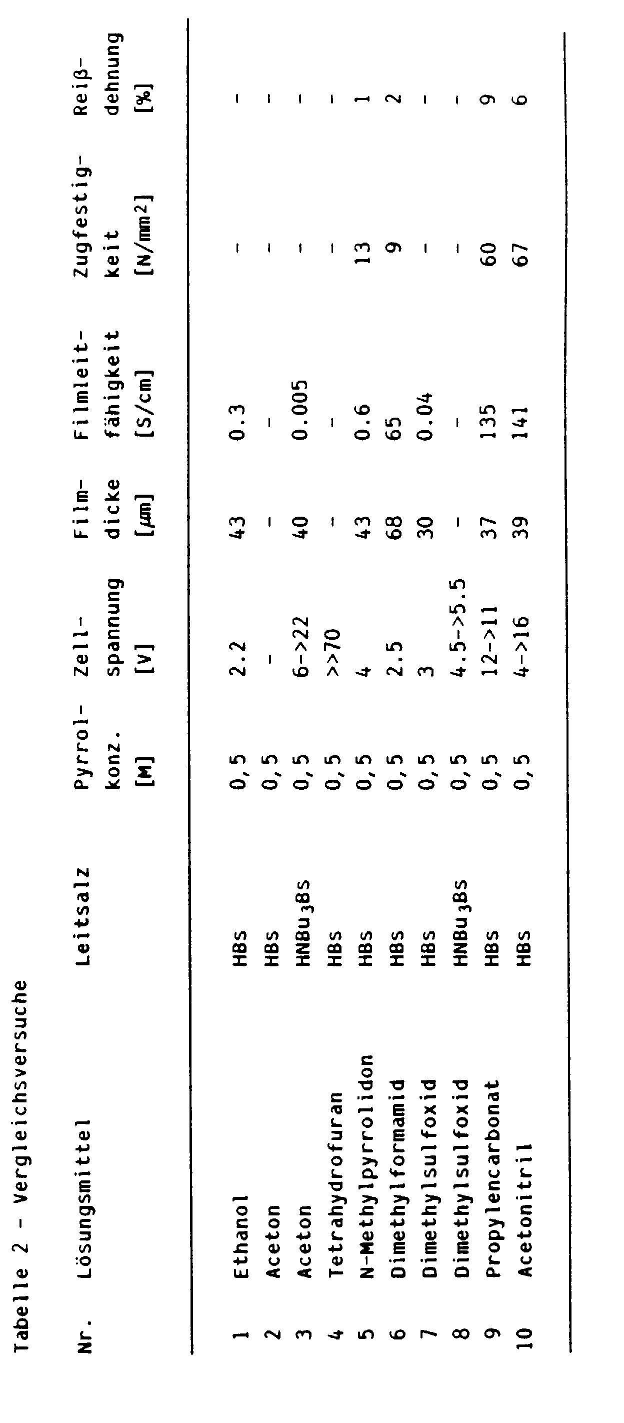

### Anmerkung zu den Vergleichsversuchen

### Vergleichsversuch 1

Der außerordentlich spröde Film konnte nicht kompakt von der Anode abgelöst und daher auch nicht im Hinblick auf Zugfestigkeit und Reißdehnung charakterisiert werden.

### Vergleichsversuch 2

Der Elektrolyt erwies sich als nicht hinreichend stabil und konnte deshalb nicht für eine elektrochemische Filmsynthese verwendet werden.

### Vergleichsversuch 3

Im Verlauf des Versuches sanken dunkle Schwaden von der Anode aus zu Boden. Die auf der Anode nach 90 min erhaltenen schwarzen Abscheidungen waren stark strukturiert, löcherig oder blasig aufgeworfen, dazu sehr spröde, so daß die Ablösung eines kompakten Films und die Bestimmung von Zugfestigkeit und Reißdehnung nicht möglich waren.

### Vergleichsversuch 4

Die elektrochemische Filmsynthese konnte nicht durchgeführt werden, da bereits zur Einstellung geringster Stromdichten extrem hohe Zellspannungen erforderlich waren (» 70 V), die von der verwendeten Stromquelle nicht geliefert werden konnten.

### Vergleichsversuch 7

Der außerordentlich spröde Film konnte nicht kompakt von der Anode abgelöst und daher auch nicht im Hinblick auf Zugfestigkeit und Reißdehnung charakterisiert werden.

### Vergleichsversuch 8

Im Verlauf des Versuchs sanken dunkle Schwaden von den Elektroden aus zum Boden der Elektrolysezelle, und auf der Oberfläche des zunehmend fauliger riechenden Elektrolyten bildete sich eine ölige Schicht aus. Es war nicht möglich, von der mit schwarzem, porösem und spröden Material bedeckten Anode einen zur Charakterisierung geeigneten kompakten Film abzulösen.

## Patentansprüche

1. Verfahren zur Herstellung filmförmiger elektrisch leitfähiger Polymerer durch anodische Oxidation von monomeren fünfgliedrigen Heterozyklen aus der Gruppe von Pyrrol, Thiophen, Furan und deren Derivaten sowie von monomeren aromatischen Aminen in einem Elektrolytlösungsmittel, dadurch gekennzeichnet, daß die verwendete Elektrolytlösung ein Sulfon enthält.

2. Verfahren nach Anspruch 1, dadurch gekennzeichnet, daß der Sulfon-Anteil am Elektrolyten 50 Gew.-% oder mehr beträgt.

3. Verfahren nach Anspruch 1, dadurch gekennzeichnet, daß Sulfolan, 3-Methylsulfolan oder ein Dialkylsulfon mit 2 bis 10 C-Atomen verwendet wird.

4. Verfahren nach Anspruch 1, dadurch gekennzeichnet, daß der Elektrolyt einen pH-Wert von 3 oder weniger aufweist und eine starke Säure enthält.

5. Verfahren nach Anspruch 1, dadurch gekennzeichnet, daß der Elektrolyt das Monomere in einer Konzentration von 0,01 bis 5 mol/l enthält.

6. Verfahren nach Anspruch 1, dadurch gekennzeichnet, daß die Elektrolytlösung ein Glykol enthält.

7. Verfahren nach Anspruch 1, dadurch gekennzeichnet, daß die Stromdichte 0,01 bis 100 mA/cm² beträgt.

## Claims

1. A process for preparing electrically conductive polymers in film form by anodic oxidation of monomeric five-membered heterocycles from pyrrole, thiophene, furan and derivatives thereof and also of monomeric aromatic amines in an electrolyte solvent, characterized in that the electrolyte solution used contains a sulfone.

2. A process as claimed in claim 1, characterized in that the sulfone content of the electrolyte is 50 % by weight or more.

3. A process as claimed in claim 1, characterized in that sulfolane, 3-methylsulfolane or a dialkyl sulfone of from 2 to 10 carbon atoms is used.

4. A process as claimed in claim 1, characterized in that the electrolyte has a pH of 3 or less and contains a strong acid.

5. A process as claimed in claim 1, characterized in that the electrolyte contains the monomer in a concentration of from 0.01 to 5 mol/l.

6. A process as claimed in claim 1, characterized in that the electrolyte solution contains a glycol.

7. A process as claimed in claim 1, characterized in that the current density is from 0.01 to 100 mA/cm².

## Revendications

1. Procédé pour la préparation de polymères électroconducteurs filmogènes par oxydation anodique de composés hétérocycliques monomères pentagonaux choisis parmi le groupe comprenant le pyrrole, le thiophène, le furanne et leurs dérivés, ainsi que des amines aromatiques monomères, dans un solvant électrolytique, caractérisé en ce que la solution électrolytique utilisée contient une sulfone.

2. Procédé selon la revendication 1, caractérisé en ce que la fraction de sulfone dans l'électrolyte représente 50% en poids ou plus.

3. Procédé selon la revendication 1, caractérisé en ce qu'on utilise le sulfolane, le 3-méthylsulfolane ou encore une dialkylsulfone contenant de 2 à 10 atomes de carbone.

4. Procédé selon la revendication 1, caractérisé en ce que l'électrolyte présente une valeur de pH égale à 3 ou moins et contient un acide fort.

5. Procédé selon la revendication 1, caractérisé en ce que l'électrolyte contient le monomère en une concentration de 0,01 à 5 moles/l.

6. Procédé selon la revendication 1, caractérisé en ce que la solution électrolytique contient un glycol.

7. Procédé selon la revendication 1, caractérisé en ce que la densité de courant s'élève de 0,01 à 100 mA/cm².
